(19) Europäisches Patentamt
European Patent Office
Office européen des brevets

(11) **EP 1 850 046 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
***F16L 9/21*** *(2006.01)*

(21) Anmeldenummer: **07006761.6**

(22) Anmeldetag: **31.03.2007**

(54) **Kunststoffrohr und Rohrleitungssystem zum Durchleiten von Abwässern**

Plastic pipe and piping system for feeding effluent

Tuyau en plastique et système de conduites destinés au guidage des eaux usées

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.04.2006 DE 102006020375**

(43) Veröffentlichungstag der Anmeldung:
**31.10.2007 Patentblatt 2007/44**

(73) Patentinhaber: **REHAU AG + Co**
**95111 Rehau (DE)**

(72) Erfinder: **Heinrich, Gerhard**
**91362 Pretzfeld (DE)**

(56) Entgegenhaltungen:
**EP-A1- 0 254 375        US-A- 3 524 476**
**US-A- 5 795 634**

**Beschreibung**

Die Erfindung betrifft ein Kunststoffrohr und ein Rohrleitungssystem zum Durchleiten von Abwässern.

Derartige Kunststoffrohre sind auf dem Markt bekannt. Durch das Hindurchleiten der Abwässer durch ein Rohrleitungssystem entsteht Luft- und Körperschall. Dieser breitet sich allseitig aus. Neben der Schallausbreitung im Rohrleitungssystem wird auch Schall durch die Rohrwand an die Umgebung abgestrahlt. Dieser Luftschall wird von Menschen als störendes Geräusch wahrgenommen.

In der Medizin ist bekannt, dass störende Geräusche einen negativen Einfluss auf das Wohlbefinden eines Menschen haben. Aus diesem Grund wird versucht, die Schallabstrahlung von Abwasserrohren zu minimieren.

Durch die Kraftanregung der Rohrwand durch die Abwässer entsteht, bevorzugt an Umlenkungen wie z. B. an Bögen, Krümmern und Abzweigen, Körperschall. Um diesen zu verringern, ist die Einleitung von Kraftsprüngen oder Kraftspitzen zu vermeiden. Da aber die Abwässer nur stoßweise in die Abwasserleitung abgegeben werden, ist dies nur in begrenztem Maße möglich. Aus diesem Grund ist die Schallabstrahlung des Abwasserrohrsystems durch andere Maßnahmen zu verringern.

Dazu wird durch Schallreflexion des sich ausbreitenden Schalls an einzelnen Unstetigkeiten versucht, die Schallausbreitung von Luft- oder Körperschall zu behindern. Der Schallreflexionsfaktor r ist gegeben durch:

$$r = \frac{\text{Schalldruck einer reflektierten Schallwelle}}{\text{Schalldruck einer einfallenden Schallwelle}}$$

Dabei nimmt mit größerem Reflexionsfaktor r die schalldämmende Wirkung zu. Dies wird in der Praxis durch einen möglichst großen Impedanzsprung an der reflektierenden Grenzfläche erreicht.

Unter der Impedanz werden alle Widerstände zusammengefasst, die der Ausbreitung von Schwingungen in einem bestimmten Umfeld entgegenwirken, z. B. haben die Eigenschaften des Ausbreitungsmediums, Hindernisse, Übergänge zu anderen Ausbreitungsmedien, sowie Gegenstände, Flächen bzw. Bereiche mit bestimmten akustischen Eigenschaften Einfluss auf die Impedanz eines Rohrleitungssystems.

Die Schallkennimpedanz $Z_F$ in N·s/m³, auch akustische Feldimpedanz genannt, berechnet sich zu:

$$Z_F = \frac{p}{\underline{v}} = \rho \cdot c$$

p - Schalldruck in N/m²
v - Schallschnelle in m/s
$\rho$ - Dichte in kg/m³
c - Schallgeschwindigkeit in m/s

Daraus ist zu erkennen, dass durch eine Erhöhung der Masse des Rohres eine größere Schallkennimpedanz erreicht werden kann, wodurch wiederum der Sprung zwischen der Impedanz der Abwässer und der des Rohrsystems vergrößert wird.

Diese Umsetzung wird z. B. in der EP 254375 B2 beschrieben. Dabei wird ein Füllstoff aus Bariumsulfat bestehend zu dem thermoplastischen Rohrmaterial zugegeben, so dass dem Kunststoffrohrteil eine Dichte von 1,8 bis 2,7 g/cm³ bei einem Flächengewicht von 8 kg/m² verliehen wird und die vorbeschriebenen Schallabsorptions-/-reflexionsmechanismen greifen.

Diese Ausführung hat jedoch den Nachteil, dass die Masse des Rohrsystems mit der Zunahme der Dichte ansteigt, wodurch die Handhabung beim Verbau in Gebäuden erschwert ist.

Bei dem erfindungsgemäßen Kunststoffrohr wird die Geräuschminderung dadurch erreicht, dass das Kunststoffrohr aus einem Grundrohr mit an der Innen- und/oder Außenfläche des Grundrohres angeordneten einextrudierten bandartigen Schichten besteht, wobei die einextrudierten bandartigen Schichten beabstandet voneinander angeordnet sind und sich die Dichte des Grundrohrmaterials von der Dichte des Materials der einextrudierten bandartigen Schichten unterscheidet.

Auf diese Weise entsteht ein Kunststoffrohr, das neben dem Dichtesprung zwischen den Abwässern und der Kunststoffrohrwandung mindestens einen weiteren Dichtesprung in radialer Richtung aufweist, an dem die Schallwellen wiederum reflektiert werden und so eine Geräuschminderung eintritt.

Es hat sich gezeigt, dass es besonders günstig ist, wenn die bandartigen einextrudierten Schichten die gleiche Breite/Ausdehnung aufweisen und regelmäßig über den Umfang des Kunststoffrohres angeordnet sind. Damit entsteht ein symmetrisches mit bandartigen Strukturen versehenes polymeres Rohr, das ohne Berücksichtigung der Einbaulage in ein Abwasserleitungsnetz eingebunden werden kann.

In diesem Zusammenhang hat es sich auch als vorteilhaft erwiesen, wenn sich die Bereiche der einextrudierten Schichten, die an der Innen- und Außenfläche des Grundrohres angeordnet sind, zumindest teilweise in radialer Richtung überlappen. Dadurch werden zumindest in Teilbereichen des Kunststoffrohres zwei Dichtesprünge geschaffen, die eine Schallreflexion bewirken.

Die Überlappungsbereiche, der an der Innen- und Außenfläche des Grundrohres angeordneten einextrudierten bandartigen Schichten, liegen vorteilhaft zwischen 5 und 100 Prozent des von den bandartigen Schichten gebildeten Kunststoffrohrumfangs.

Das Grundrohr und/oder die einextrudierten Schichten können auch farbig oder mehrfarbig ausgeführt werden. Damit ist es möglich, auch sichtbar verlegte Abflussrohre optisch ansprechend, kundenwunschgerecht und an Verlegevorschriften angepasst zu gestalten.

Es hat sich als vorteilhaft erwiesen, die einextrudierten Schichten gegenüber dem Grundrohr erhaben auszubilden. Dabei beträgt der Überstand der Schichten gegenüber dem Grundrohr vorteilhaft 0,2 bis 1,0 mm. Besonders an der Innenfläche des Grundrohres angeordnete erhabene Schichten wirken sich positiv auf das Fließverhalten der Abwässer aus, so dass durch dissipative Prozesse der Abwässer die Schallintensität verringert wird.

Die durch den Überstand der einextrudierten Schichten entstehende Abweichung des Querschnitts von einem Kreis kann durch das Aufbringen einer Deckschicht auf die innere oder äußere Rohroberfläche ausgeglichen werden.

Dabei ist die Deckschicht auf der Außenseite des Rohres vorteilhafterweise aus einem transparenten Kunststoff gefertigt, so dass das Grundrohr und die einextrudierten bandartigen Schichten sichtbar sind.

Bei dem erfindungsgemäßen Kunststoffrohr werden das Grundrohr und/oder die einextrudierten Schichten und/oder die Deckschicht aus einem vernetzten oder unvernetzten thermoplastischen Material hergestellt. Vorteilhaft werden als Werkstoffe für das Kunststoffrohr Polyolefine oder thermoplastische Elastomere eingesetzt. Es hat sich in diesem Erfindungszusammenhang gezeigt, dass es günstig ist, wenn den polymeren Werkstoffen organische und/oder anorganische Füllstoffe zugegeben sind. Bevorzuge werden als Füllstoffe Metallspäne, Wollastonit, Holzmehl, Calciumcarbonat oder Bariumsulfat verwendet.

Es liegt auch im Rahmen der Erfindung, dass die einextrudierten bandartigen Schichten und/oder das Grundrohr aus einem geschäumten thermoplastischen Kunststoff bestehen und somit auch die bandartigen Schichten eine geringere Dichte als das Grundrohr aufweisen können oder umgekehrt. Das Einbringen einer Schaumstruktur hat den Vorteil, dass die geschäumten Bereiche, sowohl des Grundrohres als auch der einextrudierten Schichten, sich bei Krafteinleitung durch die Abwässer deformieren können und somit die Energie bei der Verformung durch innere Reibung in Wärme umgewandelt wird. Damit verringert sich die durch die Abwässer eingeleitete Energie, so dass auch eine Reduzierung des entstehenden Schalls bewirkt wird.

Für die Herstellung der Schaumstruktur können gasabspaltende chemische Verbindungen als Treibmittel eingesetzt werden. Als organische Treibmittel werden Azodicarbonamid, Benzolsulfohydrazid, Cyanursäuretrihydrazid und/oder Diphenylenoxid-4,4'-disulfohydrazid und als anorganische Treibmittel wird insbesondere Natriumhydrogencarbonat verwendet. Als Hilfsmittel zur Schaumbildung werden Magnesiumoxid und Zinkoxid eingesetzt. Es werden aber auch Mischungen der polymeren Kunststoffe mit Gasen, wie z. B. Pentan, Isopentan, Propan, Isobutan, Monofluortrichlormethan, Difluordichlormethan, Stickstoff, Argon und/oder Kohlendioxid hergestellt. Nach dem Formbildungsschritt in einem Extrusionswerkzeug entspannen sich die eingemischten Gase, wodurch eine Schaumstruktur entlang der Rohroberfläche gebildet wird.

Um die Kunststoffrohre in ein Abwasserleitungssystem einzubinden, wird an einem Rohrende eine Rohrmuffe angebracht, so dass die Kunststoffrohre miteinander oder mit Kunststoffrohrformteilen, wie Abzweige, Bögen oder dergleichen, verbunden werden können.

Durch die Einbindung erfindungsgemäßer Kunststoffrohre in ein Rohrleitungssystem ist es möglich, die hörbaren Geräusche, die durch das Hindurchleiten der Abwässer entlang der Verlegestücke entstehen, vorteilhaft zu reduzieren.

Die Erfindung soll nun an nicht einschränkenden Ausführungsbeispielen näher beschrieben werden. Es zeigt:

Figur 1 - Querschnitt eines Kunststoffrohres ohne Deckschicht

Figur 2 - Querschnitt eines Kunststoffrohrs mit äußerer Deckschicht

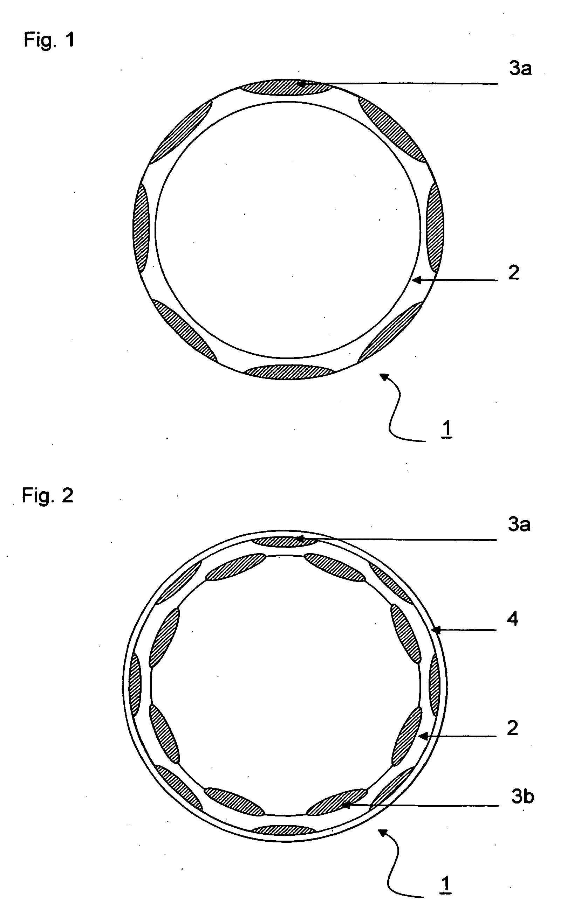

In Figur 1 ist ein Kunststoffrohr (1) im Querschnitt dargestellt, das nur an der Rohraußenseite einextrudierte bandartige Schichten (3a) aufweist. In diesem Ausführungsbeispiel stehen die bandartigen Schichten (3a) nicht über das Grundrohr (2) hinaus. Damit ist der Querschnitt des Kunststoffrohres (1) annähernd kreisförmig.

Die bandartigen Schichten (3a) sind regelmäßig über den Umfang des Abwasserrohres (1) angeordnet. An der Oberfläche wechseln sich breite Bereiche der einextrudierten Schichten (3a) mit Bereichen des Grundrohres (2) ab. Dadurch entsteht bei Verwendung unterschiedlicher Farbgebungen des Grundrohres (2) und der bandartigen Schichten (3a) eine in Längsrichtung des Rohres (1) verlaufende gestreifte Oberfläche. Damit ist ein erfindungsgemäßes Kunststoffrohr (1) von anderen leicht zu unterscheiden, wenn keine Deckschicht (4) an der Außenseite des Rohres (1) aufgebracht ist.

In diesem Beispiel besteht das Grundrohr (2) aus Polypropylen, das mit Bariumsulfat als Füllstoff versehen ist. Das bei der Herstellung des Kunststoffrohres (1) durch Koextrusion verwendete Material für die bandartigen Schichten (3a) besteht aus ungefülltem Polypropylen. Durch die Zugabe eines Schaumbildners kann nach dem Verlassen des Werkzeugs eine Schaumstruktur erzeugt werden. Die Oberfläche der Schaumstruktur kann durch eine Deckschicht (4) gegen Abrieb und Verschmutzung geschützt werden. Es ist aber auch möglich eine geschlossenporige bandartige Schaumschicht (3a) herzustellen, die keinen separaten Schutz benötigt.

In Figur 2 ist ein Kunststoffrohr (1) im Querschnitt dargestellt, das an der Rohrinnenseite und an der Rohraußenseite an dem Grundrohr (2) angeordnete einextrudierte bandartige Schichten 3 sowie eine äußere Deckschicht (4) aufweist. Bei dem erfindungsgemäßen Abwasserrohr (1) bestehen die einextrudierten Schichten (3a, 3b) und die Deckschicht (4) aus einem thermoplastischen Elastomer, wobei sich die Dichte das Material gegenüber dem Grundrohrmaterial unterscheidet. Die auf der Rohraußenseite angeordneten bandartigen Schichten (3a) bilden mit der Deckschicht (4) eine Einheit, die besonders abriebfest ist. Durch die aus thermoplastischem Elastomer bestehende Oberfläche (4) wird außerdem eine gute Handhabbarkeit der Kunststoffrohres (1) gewährleistet, was besonders beim Transport und beim Einbau der Rohre (1) in ein Abwasserleitungssystem vorteilhaft ist.

In diesem Beispiel sind die einextrudierten bandartigen Schichten (3a, 3b) regelmäßig über den Umfang des Kunststoffrohres (1) an der inneren und äußeren Rohrwand angeordnet. Es sind aber auch unregelmäßige Anordnungen sowohl an der Rohrinnen- als auch an der Rohraußenseite der einextrudierten Schichten (3a, 3b) möglich.

In radialer Richtung überlappen sich die Bereiche der bandartigen Schichten (3a, 3b), die an der Rohrinnen- und Rohraußenseite in diesem Ausführungsbeispiel einextrudiert sind. Damit wird erreicht, dass über den gesamten Umfang des Abwasserrohres (1) gewährleistet ist, dass in radialer Richtung mindestens ein Übergang zwischen zwei Materialzusammensetzungen mit unterschiedlicher Dichte angeordnet ist.

Die mit dem Abwasser in Berührung kommenden bandartigen Schichten (3b) sind gegenüber dem Grundrohr (2) erhaben ausgebildet, wodurch eine weitere Schalldämpfung und somit eine Minderung der hörbaren Fließgeräusche erreicht wird. Es wurde auch erkannt, dass eine spiralförmige Anordnung der an der Rohrinnenseite des Grundrohres (2) einextrudierten Schichten (3b) sich besonders günstig auf das Fließverhalten der Abwässer auswirkt und zu einer Schallreduzierung beiträgt.

Es ist möglich, die einextrudierten Schichten (3a, 3b) in einer anderen Farbgestaltung als das Grundrohr (2) auszuführen. Damit diese Farbgebung auch als gestalterisches Element nach dem Aufbringen der Deckschicht (4) noch sichtbar ist, muss die Deckschicht (4) aus einer transparenten oder semitransparenten Materialzusammensetzung gefertigt sein. Somit ist es möglich, das Kunststoffrohr (1) so zu gestalten, dass es bei einer Verlegung ohne nachträgliche Verkleidung sich farblich in die Raumgestaltung einfügt.

**Patentansprüche**

1. Kunststoffrohr (1) zum Durchleiten von Abwässern, **dadurch gekennzeichnet, dass** das Kunststoffrohr (1) aus einem Grundrohr (2) mit an der Innen- und/oder Außenfläche des Grundrohres (2) angeordneten einextrudierten bandartigen Schichten (3a, 3b), die beabstandet voneinander angeordnet sind, besteht, und dass sich die Dichte des Grundrohrmaterials von der Dichte des Materials der einextrudierten bandartigen Schichten (3a, 3b) unterscheidet.

2. Kunststoffrohr (1) nach Anspruch 1, **dadurch gekennzeichnet, dass** die einextrudierten bandartigen Schichten (3a, 3b) an der Innen- und/oder an der Außenfläche des Grundrohres (2) die gleiche Bandbreite aufweisen und regelmäßig über den Umfang des Kunststoffrohres (1) angeordnet sind.

3. Kunststoffrohr (1) nach Anspruch 1 oder 2, **dadurch gekennzeichnet, dass** die Bereiche der einextrudierten Schichten (3a, 3b) an der Innen- und an der Außenfläche des Grundrohres (2) sich in radialer Richtung zumindest teilweise überlappen.

4. Kunststoffrohr (1) nach Anspruch 3, **dadurch gekennzeichnet, dass** die an der Innen- und an der Außenfläche des Grundrohres (2) angeordneten einextrudierten Schichten (3a, 3b) im Bereich von 5 bis 100 Prozent überlappen.

5. Kunststoffrohr (1) nach zumindest einem der vorherigen Ansprüche, **dadurch gekennzeichnet, dass** das Grundrohr (2) und/oder die einextrudierten Schichten (3a, 3b) farbig oder mehrfarbig ausgeführt sind.

**6.** Kunststoffrohr (1) nach zumindest einem der vorherigen Ansprüche, **dadurch gekennzeichnet, dass** die an der Innen- und/oder Außenfläche des Grundrohres (2) angeordneten einextrudierten Schichten (3a, 3b) gegenüber dem Grundrohr (2) erhaben ausgebildet sind.

**7.** Kunststoffrohr (1) nach Anspruch 6, **dadurch gekennzeichnet, dass** die einextrudierten Schichten (3a, 3b) zwischen 0,2 und 1,0 mm gegenüber dem Grundrohr (2) überstehen.

**8.** Kunststoffrohr (1) nach zumindest einem der vorherigen Ansprüche, **dadurch gekennzeichnet, dass** das Kunststoffrohr (1) innen und/oder außen eine Deckschicht (4) über dem Grundrohr (2) und den einextrudierten Schichten (3a, 3b) aufweist.

**9.** Kunststoffrohr (1) nach Anspruch 6, **dadurch gekennzeichnet, dass** die äußere Deckschicht (4) transparent ist.

**10.** Kunststoffrohr (1) nach zumindest einem der vorhergehenden Ansprüche, **dadurch gekennzeichnet, dass** das Grundrohr (2) und/oder die einextrudierten Schichten (3a, 3b) und/oder die Deckschicht (4) aus einem vernetzten oder unvernetzten thermoplastischen Material, insbesondere aus einem Polyolefin oder einem thermoplastischen Elastomer, bestehen.

**11.** Kunststoffrohr (1) nach Anspruch 10, **dadurch gekennzeichnet, dass** das Material organische und/oder anorganische Füllstoffe enthält.

**12.** Kunststoffrohr (1) nach zumindest einem der vorhergehenden Ansprüche, **dadurch gekennzeichnet, dass** das Kunststoffrohr (1) zumindest abschnittsweise geschäumte Bereiche aufweist.

**13.** Kunststoffrohr (1) nach zumindest einem der vorhergehenden Ansprüche, **dadurch gekennzeichnet, dass** das Kunststoffrohr (1) durch Koextrusion hergestellt ist.

**14.** Rohrleitungssystem zum Durchleiten von Abwässern, wobei das Rohrleitungssystem mindestens ein Kunststoffrohr (1) gemäß Anspruch 1 enthält.

**15.** Rohrleitungssystem nach Anspruch 14, **dadurch gekennzeichnet, dass** durch das Rohrleitungssystem die hörbaren Geräusche vermindert sind.


**Claims**

**1.** Plastic pipe (1) for feeding effluent, **characterized in that** the plastic pipe (1) comprises a soil pipe (2) having extruded-in, strip-like layers (3a, 3b) which are arranged on the inner surface and/or outer surface of the soil pipe (2) and are arranged at a distance from one another, and **in that** the density of the soil pipe material differs from the density of the material of the extruded-in, strip-like layers (3a, 3b).

**2.** Plastic pipe (1) according to Claim 1, **characterized in that** the extruded-in, strip-like layers (3a, 3b) on the inner surface and/or on the outer surface of the soil pipe (2) have the same strip width and are arranged regularly over the circumference of the plastic pipe (1).

**3.** Plastic pipe (1) according to Claim 1 or 2, **characterized in that** the regions of the extruded-in layers (3a, 3b) on the inner and outer surfaces of the soil pipe (2) at least partially overlap in the radial direction.

**4.** Plastic pipe (1) according to Claim 3, **characterized in that** the extruded-in layers (3a, 3b) arranged on the inner and outer surfaces of the soil pipe (2) overlap by an extent within the range of from 5 to 100 percent.

**5.** Plastic pipe (1) according to at least one of the preceding claims, **characterized in that** the soil pipe (2) and/or the extruded-in layers (3a, 3b) are coloured or multicoloured.

**6.** Plastic pipe (1) according to at least one of the preceding claims, **characterized in that** the extruded-in layers (3a, 3b) arranged on the inner surface and/or outer surface of the soil pipe (2) are raised with respect to the soil pipe (2).

**7.** Plastic pipe (1) according to Claim 6, **characterized in that** the extruded-in layers (3a, 3b) protrude beyond the soil pipe (2) by an extent of between 0.2 and 1.0 mm.

8. Plastic pipe (1) according to at least one of the preceding claims, **characterized in that** the inside and/or outside of the plastic pipe (1) is provided with a cover layer (4) above the soil pipe (2) and the extruded-in layers (3a, 3b).

9. Plastic pipe (1) according to Claim 6, **characterized in that** the outer cover layer (4) is transparent.

10. Plastic pipe (1) according to at least one of the preceding claims, **characterized in that** the soil pipe (2) and/or the extruded-in layers (3a, 3b) and/or the cover layer (4) consist of a crosslinked or non-crosslinked thermoplastic material, in particular of a polyolefin or a thermoplastic elastomer.

11. Plastic pipe (1) according to Claim 10, **characterized in that** the material contains organic and/or inorganic fillers.

12. Plastic pipe (1) according to at least one of the preceding claims, **characterized in that** at least sections of the plastic pipe (1) have foamed regions.

13. Plastic pipe (1) according to at least one of the preceding claims, **characterized in that** the plastic pipe (1) is produced by coextrusion.

14. Piping system for feeding effluent, wherein the piping system contains at least one plastic pipe (1) according to Claim 1.

15. Piping system according to Claim 14, **characterized in that** the piping system reduces the audible noise.

## Revendications

1. Tube (1) en matière synthétique destiné à l'évacuation d'eaux usées, **caractérisé en ce que** le tube (1) en matière synthétique est constitué d'un tube de base (2) qui présente sur la surface intérieure et/ou la surface extérieure du tube de base (2) des couches (3a, 3b) en.forme de bande incorporées par extrusion et disposées à distance les unes des autres et **en ce que** la densité du matériau du tube de base est différente de la densité du matériau des couches (3a, 3b) en forme de bande incorporées par extrusion.

2. Tube (1) en matière synthétique selon la revendication 1, **caractérisé en ce que** les couches (3a, 3b) en forme de bande incorporées par extrusion présentent la même largeur sur la surface intérieure et/ou la surface extérieure du tube de base (2) et sont disposées de manière uniforme à la périphérie du tube (1) en matière synthétique.

3. Tube (1) en matière synthétique selon les revendications 1 ou 2, **caractérisé en ce que** les parties des couches (3a, 3b) incorporées par extrusion sur la surface intérieure et sur la surface extérieure du tube de base (2) se superposent au moins partiellement dans la direction radiale.

4. Tube (1) en matière synthétique selon la revendication 3, **caractérisé en ce que** les couches (3a, 3b) incorporées par extrusion sur la surface intérieure et sur la surface extérieure du tube de base (2) se superposent sur 5 à 100 %.

5. Tube (1) en matière synthétique selon au moins l'une des revendications précédentes, **caractérisé en ce que** le tube de base (2) et/ou les couches (3a, 3b) incorporées par extrusion sont colorées ou polychromes.

6. Tube (1) en matière synthétique selon au moins l'une des revendications précédentes, **caractérisé en ce que** les couches (3a, 3b) incorporées par extrusion dans la surface intérieure et/ou la surface extérieure du tube de base (2) sont en relief par rapport au tube de base (2).

7. Tube (1) en matière synthétique selon la revendication 6, **caractérisé en ce que** les couches (3a, 3b) incorporées par extrusion débordent de 0,2 à 1,0 mm par rapport au tube de base (2).

8. Tube (1) en matière synthétique selon au moins l'une des revendications précédentes, **caractérisé en ce que** le tube (1) en matière synthétique présente à l'intérieur et/ou à l'extérieur une couche de recouvrement (4) disposée au-dessus du tube de base (2) et des couches (3a, 3b) incorporées par extrusion.

**9.** Tube (1) en matière synthétique selon la revendication 6, **caractérisé en ce que** la couche extérieure de recouvrement (4) est transparente.

**10.** Tube (1) en matière synthétique selon au moins l'une des revendications précédentes, **caractérisé en ce que** le tube de base (2) et/ou les couches (3a, 3b) incorporées par extrusion et/ou la couche de recouvrement (4) sont constituées d'un matériau thermoplastique non réticulé, en particulier d'une polyoléfine ou d'un élastomère thermoplastique.

**11.** Tube (1) en matière synthétique selon la revendication 10, **caractérisé en ce que** le matériau contient des charges organiques et/ou des charges minérales.

**12.** Tube (1) en matière synthétique selon au moins l'une des revendications précédentes, **caractérisé en ce qu'**au moins certaines parties du tube (1) en matière synthétique présentent des parties moussées.

**13.** Tube (1) en matière synthétique selon au moins l'une des revendications précédentes, **caractérisé en ce que** le tube (1) en matière synthétique est fabriqué par coextrusion.

**14.** Système de conduits tubulaires destiné à évacuer les eaux usées, le système de conduits tubulaires contenant au moins un tube (1) en matière synthétique selon la revendication 1.

**15.** Système de conduits tubulaires selon la revendication 14, **caractérisé en ce que** le système de conduits tubulaires diminue le bruit audible.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 254375 B2